# EUROPEAN PATENT APPLICATION

(11) **EP 3 031 865 A1**
(43) Date of publication of application: **15.06.2016**
(21) Application number: 14834613.3
(22) Date of filing: 07.08.2014
(51) Int. Cl.: C08L 101/00, C08J 3/12, C08K 5/00, C09B 67/02, C09B 67/20, G03G 9/08, G03G 9/09, G03G 9/097

(54) **POWDER, METHOD FOR PREVENTING BLEEDING OF DYE, AND METHOD FOR IMPROVING DYEING PROPERTIES**

(30) Priority: 09.08.2013 JP 2013166180; 12.12.2013 JP 2013257101; 12.12.2013 JP 2013257104; 27.03.2014 JP 2014066952
(71) Applicant: Nippon Kayaku Kabushiki Kaisha, Tokyo 100-0005 (JP)
(72) Inventor: SHIMIZU Shinsuke, Tokyo 115-8588 (JP); TERANISHI, Makoto, Tokyo 115-8588 (JP); HAGIWARA Yuta, Tokyo 115-8588 (JP); SUZUKI Yuji, Tokyo 115-8588 (JP)
(74) Representative: Gille Hrabal
(86) International application number: PCT/JP2014/070927
(87) International publication number: WO 2015/020164

(57) **Abstract**

[Problem]

The present invention addresses the problem of providing: a powder of a resin composition comprising at least a resin and two types of dyes each having a sublimation property; a method for preventing the bleeding of the dyes from the aforementioned powder in the powder; and a method for improving dyeing properties in a dyeing method using the powder as a coloring agent.

[Solution]

A powder of a resin composition comprising at least a resin and at least two types of dyes each having a sublimation property, wherein the solubility of at least one of the above-mentioned at least two types of dyes in propylene glycol monomethyl ether acetate is 0.2 to 3 g/100 ml and the solubility of at least one other dye among the above-mentioned at least two types of dyes in propylene glycol monomethyl ether acetate is less than 0.2 g/100 ml.

## Description

### TECHNICAL FIELD

The present invention relates to: a resin-composition powder containing at least a resin and at least two types of dyes each having a sublimation property; a method for preventing bleeding of dye in the resin-composition powder; and a method for improving dyeing properties in the resin-composition powder.

### BACKGROUND ART

Powders of a resin composition containing a dye are used as, e.g., as coloring materials in a variety of fields such as UV-curable inks, heat-curable inks, inkjet inks, gravure inks, offset inks, and other inks, liquid toners, transfer-type silver halide light-sensitive materials, for heat-sensitive transfer recording materials, recording pens, optical recording medium materials, adhesives, powder coatings, and powder toners.

A variety of pigments and dyes can be used as a colorant contained in such powders. However, it has been known that powders of a resin composition containing a dye having a sublimation property as a colorant characteristically experience powder aggregation, particularly under a high temperature, e.g., during transfer, used as a coloring material, or long-term storage, or due to temporal change, unlike other colorants. Therefore, prevention of such aggregation has become an extremely important problem.

Such aggregation leads to a loss of properties such as the fluidity, dispersibility, or charging performance of the powder. Therefore, there is strong demand for prevention of powder aggregation.

In addition, because such phenomenon is prominently observed in powders containing a dye having a sublimation property, the need to inhibit this phenomenon is particularly significant with regards to such powders.

It is known that in dyeing methods in which such a resin-composition powder containing a dye is used as a colorant, defects readily occur with regards to dyeing properties, such as white background fouling, density unevenness and dyeing unevenness of the dyed product. Although the underlying reason is not clear, this phenomenon is presumed to be caused by an increased likelihood of a defect in dyeing properties when a resin-composition powder containing a dye is exposed to high temperatures during transportation or use, resulting in a change in properties of the powder due to the high temperature.

Such dyeing defects are not observed in powders of a resin composition containing a pigment and are specific to powders containing a dye. Therefore, amelioration of such defects is an extremely important problem in relation to powders containing a dye.

Patent Document 1 discloses a colorant microparticle dispersion produced from a hydrophobic colorant selected from oil-soluble dyes and disperse dyes and a rosin compound, which is a natural resin, as a raw material for a water-based inkjet recording ink.

With regards to dry-type powder toners and liquid toners used for electrophotography, a variety of types are disclosed, e.g., in Patent Documents 2-5.

Sublimation transfer dyeing using electrophotography is disclosed, e.g., in Patent Documents 6-11.

### PRIOR ART DOCUMENTS

### PATENT DOCUMENTS

Patent Document 1: JPH8-34941A
Patent Document 2: JP2012-1829A
Patent Document 3: JPH5-27474A
Patent Document 4: JPH9-73198A
Patent Document 5: JPH3-18866A
Patent Document 6: JPH2-295787A
Patent Document 7: JPH6-051591A
Patent Document 8: JPH10-058638A
Patent Document 9: JP2000-029238A
Patent Document 10: JP2006-500602T
Patent Document 11: JP2011-100129A

### SUMMARY OF THE INVENTION

### PROBLEMS TO BE SOLVED BY THE INVENTION

The present invention addresses the problem of providing a resin-composition powder containing at least a resin and a dye having a sublimation property, a method for preventing bleeding of the dye in the powder, and a method for improving dyeing properties in a dyeing method in which the powder is used as a colorant.

### MEANS USED TO SOLVE THE ABOVE-MENTIONED PROBLEM

Through extensive research into solving the above problem, the inventors of the present invention discovered that the above problem can be solved by a resin-composition powder containing at least two types of dyes each having a specific solubility in propylene glycol monomethyl ether acetate, and arrived at the present invention. Specifically, the present invention pertains to the following aspects (1) to (16).
(1) A resin-composition powder comprising at least a resin and at least two types of dyes each having a sublimation property,
   wherein at least one type of dye from among the at least two types of dyes each having a sublimation property has a solubility in propylene glycol monomethyl ether acetate of 0.2 to 3 g/100 mL, and wherein at least one type of another dye from among the at least two types of dyes has a solubility in propylene glycol monomethyl ether acetate of less than 0.2 g/100 mL;
(2) A resin-composition powder comprising at least a resin and at least two types of dyes each having a sublimation property, wherein at least one type of dye from among the at least two types of dyes each having a sublimation property has a solubility in propylene glycol monomethyl ether acetate of 0.5 to 3 g/100 mL, and
   wherein at least one type of another dye from among the at least two types of dyes has a solubility in propylene glycol monomethyl ether acetate of less than 0.5 g/100 mL;
(3) The powder according to (2), wherein the ratio, on a mass basis, between the total content of the dye having a solubility in propylene glycol monomethyl ether acetate of 0.5 to 3 g/100 mL and the total content of the dye having a solubility in propylene glycol monomethyl ether acetate of less than 0.5 g/100 mL in the total mass of the resin-composition powder is 10/90 to 90/10;
(4) The powder according to (2) or (3), wherein the at least one type of dye from among the at least two types of dyes each having a sublimation property having a solubility in propylene glycol monomethyl ether acetate of 0.5 to 3 g/100 mL is a dye selected from anthraquinone, quinophthalone, and azo compounds, and
   wherein the at least one type of another dye is a dye selected from anthraquinone, azo, azomethine, indophenol, indoaniline, pyrroline, quinophthalone, and naphthalimide compounds;
(5) The resin-composition powder according to any of (2) to (4), for use in prevention of bleeding of dye from the powder, or for use as a colorant in a method for improving dyeing properties;
(6) A toner comprising the resin-composition powder according to any of (2) to (4), a charge control agent, and a wax;
(7) The toner according to (6), for use in prevention of bleeding of dye, or for use as a colorant in a method for improving dyeing properties;
(8) A method for preventing bleeding of dye from the powder in the resin-composition powder according to any of (2) to (4);
(9) The method for preventing bleeding of dye according to (8), wherein the resin-composition powder is a toner;
(10) The method for preventing bleeding of dye according to (8) or (9), wherein the resin-composition powder is a toner further comprising a charge control agent and a wax;
(11) A method for improving dyeing properties in a dyeing method in which the resin-composition powder according to any of (2) to (4) is used as a colorant;
(12) The method for improving dyeing properties according to (11), wherein the resin-composition powder is a toner;
(13) The method for improving dyeing properties according to (11) or (12), wherein the resin-composition powder further comprises a charge control agent and a wax;
(14) The method for improving dyeing properties according to any of (11) to (13), wherein the dyeing method in which the resin-composition powder is used as a colorant is a sublimation transfer dyeing method comprising:
   affixing a resin-composition powder to an intermediate recording medium by electrophotography, and
   sublimation-transferring a dye contained in the resin-composition powder affixed to the intermediate recording medium to a material to be dyed, whereby dyeing is performed;
(15) An intermediate recording medium to which the resin-composition powder is affixed by electrophotography in the method for improving dyeing properties according to (14); and
(16) A substance dyed by the method according to any of (11) to (14).

### ADVANTAGES OF THE INVENTION

According to the present invention, there can be provided a resin-composition powder containing at least a resin and a dye having a sublimation property, a method for preventing bleeding of the dye in the powder, and a method for improving dyeing properties in a dyeing method in which the powder is used as a colorant.

### BEST MODE FOR CARRYING OUT THE INVENTION

The present invention will now be described in detail. Unless otherwise specified, in the present specification, including the examples, etc., "part" refers to mass parts and "%" refers to percentage by mass.

The present invention solved the above problem with regards to a resin-composition powder containing at least a resin and at least a dye having a sublimation property by: adding at least one type of another dye and having the powder contain at least two types of dyes; having the solubility of at least one type of dye from among the at least two types of dyes having a sublimation property in propylene glycol monomethyl ether acetate be 0.5 to 3 g/100 mL, and having the solubility of at least one type of another dye from among the at least two types of dyes in propylene glycol monomethyl ether acetate be less than 0.5 g/100 ml; or having the solubility of at least one type of dye from among the at least two types of dyes having a sublimation property in propylene glycol monomethyl ether acetate be 0.2 to 3 g/100 mL, and having the solubility of at least one type of another dye from among the at least two types of dyes in propylene glycol monomethyl ether acetate be less than 0.2 g/100 mL.

Propylene glycol monomethyl ether acetate refers to propylene glycol-1-monomethyl ether-2-acetate, and may be abbreviated to "PGMEA" herein.

An example of at least one type of dye having a solubility in PGMEA of 0.2 to 3 g/100 mL is preferably a dye having a solubility of 0.5 to 3 g/100 mL, and more preferably a dye having a solubility of 0.5 to 2 g/100 mL.

The ratio between the total content of the at least one type of dye and the total content of the at least one type of another dye contained in the total mass of the resin-composition powder is normally 10/90 to 90/10, preferably 30/70 to 70/30, and more preferably 40/60 to 60/40. However, when three or more types of dyes are combined and the powder is used as a black colorant, the dyes are preferably mixed arbitrarily so that the above ratio is in the range of 10/90 to 90/10.

The term "powder" of a resin composition is used so as to encompass all powders having a variety of shapes, such as particulate powders.

The solubility in PGMEA of a dye having a sublimation property is measured by: adding an excessive amount of the solid of the dye to 100 mL of PGMEA at 25°C; stirring the combination for one hour; then causing solids that have not dissolved to be filtered under reduced pressure using a Nutsche filter (filtration diameter: 70 mm), a filter paper (Advantec, No. 5C, 70 mm), a suction bottle, and an aspirator (AS ONE, aspirator AS-01, ultimate vacuum: 0.09 MPa (25°C); and measuring the mass of the filtration residue.

The measurement is performed at least twice for each dye, and a value obtained by rounding up/down the second significant figure of the resulting value is deemed to be the solubility of the dye. If there is a difference between the two measured values, the values obtained from the two measurements are set out as the upper limit value and the lower limit value.

Though the solubility in PGMEA would be readily measured by a person skilled in the art, examples of dyes satisfying the above ranges for, e.g., the three primary colors of yellow, magenta, and cyan include C.I. Disperse Yellow 54, C.I. Disperse Red 60, and C.I. Disperse Blue 359.

The abovementioned powder aggregation is presumed to be caused by a phenomenon in which a dye uniformly dissolved or dispersed in the resin composition becomes non-uniform possibly due to heat and deposits (bleeds) as a solid on the surface of the resin composition. This state in which the dye has experienced bleeding can be verified by observing the powder using, e.g., an electron microscope. It was found that there is correlation between powder aggregation and this state in which the dye has experienced bleeding, and there is indication that powder aggregation is less likely to occur, or occurs less readily, when the degree of dye bleeding is smaller. This was verified by evaluation testing, and it was found that prevention of bleeding of dye makes it possible to inhibit powder aggregation.

Examples of the dyes having a sublimation property include dyes preferably of grade 3 to 4 or lower, more preferably grade 3 or lower, as a test result of thermosensitive treatment test (C test) dye (polyester) in "Test Methods for Color Fastness to Dry Heat [JIS L 0879:2005] (reaffirmed 2010, revised 20th January 2005, published by Japanese Standards Association)". The following are examples of dyes, from among such known dyes, that have a C.I. number.

Examples of yellow dyes include C.I. Disperse Yellow 3, 7, 8, 23, 39, 51, 54, 60, 71, and 86, and C.I. Solvent Yellow 114, and 163, etc.

Examples of orange dyes include C.I. Disperse Orange 1, 1:1, 5, 20, 25, 25:1, 33, 56, and 76, etc.

Examples of brown dyes include C.I. Disperse Brown 2, etc.

Examples of red dyes include C.I. Disperse Red 11, 50, 53, 55, 55:1, 59, 60, 65, 70, 75, 93, 146, 158, 190, 190:1, 207, 239, and 240, and C.I. Vat Red 41, etc.

Examples of violet dyes include C.I. Disperse Violet 8, 17, 23, 27, 28, 29, 36, and 57, etc.

Examples of blue dyes include C.I. Disperse Blue 19, 26, 26:1, 35, 55, 56, 58, 64, 64:1, 72, 72:1, 81, 81:1, 91, 95, 108, 131, 141, 145, 359, and 360, and C.I. Solvent Blue 3, 63, 83, 105, and 111.

The above dyes can be categorized into, e.g., anthraquinone, azo, azomethine, indophenol, indoaniline, quinophthalone, methine, anthrapyridone, naphthalimide, xanthene, triarylmethane, quinacridone, oxazine, pyrroline, cyanine, and phthalocyanine compounds.

It is preferable that the dyes contain at least two types of dyes including, from above, a combination of an anthraquinone compound and an anthraquinone compound, an anthraquinone compound and an azo compound, an anthraquinone compound and an azomethine compound, an anthraquinone compound and an indophenol compound, an anthraquinone compound and an indoaniline compound, an anthraquinone compound and a pyrroline compound, a quinophthalone compound and a quinophthalone compound, a quinophthalone compound and an anthraquinone compound, a quinophthalone compound and an azo compound, a quinophthalone compound and a naphthalimide compound, an azo compound and an azo compound, an azo compound and an azomethine compound, an azo compound and an indophenol compound, an azo compound and an indoaniline compound, or an azo compound and a pyrroline compound, etc.

It is more preferable that the dyes contain at least two types of dyes including a combination, from among the above combination, of an anthraquinone compound and an anthraquinone compound, an anthraquinone compound and an azo compound, a quinophthalone compound and an azo compound, or a quinophthalone compound and an anthraquinone compound.

At least two types of the above dyes are used with each other. More than two types may be used together (combined) in order to, e.g., obtain the desired color.

For example, in order to prepare black ink, it is possible to use a blue dye as a main component, add an orange dye and a red dye as appropriate to adjust the color to black, and use the resulting mixture as a black dye. In addition, a plurality of dyes may be combined in order to finely adjust a color such as blue, orange, red, violet, and black to a desired color.

No particular restrictions exist with regards to the resin contained in the resin-composition powder. The resin can be selected as appropriate from known resins according to the intended application, as long as the resin can be mixed with the dyes.

Specific examples of such resins include styrene or styrene derivative polymers, styrene copolymers, polymethylmethacrylate, polybutylmethacrylate, polyvinyl chloride, polyvinyl acetate, polyethylene, polypropylene, polyesters, epoxy resins, epoxy polyol resins, polyurethane, polyamide, polyvinyl butyral, polyacrylic resin, rosin, modified rosin, terpene resins, aliphatic hydrocarbon resins, alicyclic hydrocarbon resins, aromatic petroleum resins, chlorinated paraffins, and paraffin waxes.

The above resins may be used solely or in a combination of two or more types.

Examples of the styrene or styrene derivative polymers include polystyrene, poly-p-chlorostyrene, and polyvinyl toluene, etc.

Examples of the styrene copolymers include styrene-p-chlorostyrene copolymers, styrene-propylene copolymers, styrene-vinyl toluene copolymers, styrene-vinyl naphthalene copolymers, styrene-acrylic acid ester copolymers (styrene-methyl acrylate copolymers, styrene-ethyl acrylate copolymers, styrene-butyl acrylate copolymers, styrene-octyl acrylate copolymers, etc.), styrene-methacrylic acid ester copolymers (styrene-methyl methacrylate copolymer, styrene-ethyl methacrylate copolymers, styrene-butyl methacrylate copolymers), styrene-methyl-α-chlormethacrylate copolymers, styrene-acrylonitrile copolymers, styrene-vinyl methyl ketone copolymers, styrene-butadiene copolymers, styrene-isoprene copolymers, styrene-acrylonitrile indene copolymers, styrene-maleic acid copolymers, and styrene-maleic acid ester copolymers.

Examples of commercial available products of the above resins include: Diacron FC-684, Diacron FC-1224, and Diacron FC-316, etc., (MITSUBISHI RAYON) known as polyesters; and CPR-100, CPR-250, and CPR-390, etc., (MITSUI CHEMICALS) known as styrene-acrylic acid ester copolymers.

No particular restrictions exist with regards to the application of the resin composition. Examples of applications include: colorants in UV-curable inks, heat-curable inks, inkjet inks, gravure inks, offset inks, and other printing inks and liquid toners; transfer-type silver halide light-sensitive materials; heat-sensitive transfer recording materials; colorants contained in recording pens, optical recording medium materials, and adhesives; and colorants contained in powder coatings and powder toners. Preferred applications from among the above are colorants contained in: UV-curable inks, heat-curable inks, inkjet inks, gravure inks, offset inks, and other printing inks and liquid toners; and powder coatings and powder toners, and include powdery colorant resin compositions, powder coatings, and powder toners contained in liquid toners.

No particular restrictions exist with regard to the total dye content of the resin-composition powder, it being possible to select the total content as appropriate according to purpose. As a guide, the total content is normally 1 to 40% and preferably 2 to 35% in relation to the total mass of the powder.

If the total dye content is less than 1%, the performance as a colorant will be insufficient. If the total content exceeds 40%, the dissolution or dispersion of the dye in the powder will be poor, and it becomes difficult to inhibit bleeding of the dyes and to improve dyeing properties.

The resin-composition powder can be used for a variety of applications as described above. Therefore, the resin-composition powder may contain an additive other than the resin according to the intended application.

For powder toners, examples of additives include waxes, charge control agents, and external additives. Known prior art documents set out information such as the type of such additives, the content in relation to the total mass of the resin-composition powder, and a method for manufacturing a powder toner containing such additives. When the resin-composition powder is used as a powder toner, the powder toner may be prepared on the basis of known prior art documents. The resin-composition powder may be prepared in a similar manner when the powder is to be used for another application.

The resin-composition powder exhibits a sufficient aggregation-preventing effect even when such an additive is contained.

No particular restrictions exist for the wax, which may be selected from known waxes. From among known waxes, it is preferable to use a wax having a melting point of normally 50 to 160°C, further preferably 50 to 150°C, and even more preferably 50 to 120°C. A wax of such description being contained in the resin-composition powder causes the resin-composition powder to effectively function as a release agent between a fixing roller and a toner interface, improving the hot offset performance even when used oillessly (i.e., without applying an oil or another release agent onto the fixing roller).

Examples of the wax include natural waxes, such as: carnauba wax, cotton wax, wood wax, rice wax, and other vegetable waxes; beeswax, lanolin, and other animal waxes; montan wax, ozokerite, selsyn, and other mineral waxes; and paraffin, microcrystalline wax, petrolatum, and other petroleum waxes.

Other examples include synthetic waxes such as: Fischer-Tropsch wax, polyethylene wax, and other synthetic hydrocarbon waxes; and esters, ketones, ethers, and other synthetic waxes.

It is also possible to use, as a wax: a fatty acid amide such as a 12-hydroxy stearic acid amide, stearic acid amide, phthalic anhydride imide, or chlorinated hydrocarbon; a homopolymer or a copoymer of a polyacrylate such as poly-n-stearyl methacrylate and poly-n-lauryl methacrylate, which are crystalline polymer resins having a low molecular weight (e.g., a copolymer of n-stearyl acrylate-ethyl methacrylate); or a crystalline polymers having a long alkyl group in a side chain.

Any of the waxes may be used solely or in a combination of two or more types.

The wax content is normally 0.1 to 20%, and preferably 0.5 to 10%.

If the wax content is less than 0.1%, offsetting of the resin-composition powder to the fixing roller will occur more readily, and if the wax content exceeds 20%, the fixation of the resin-composition powder to the intermediate recording medium becomes poor. No particular restrictions exist with regard to the method for procuring the wax; the wax may be synthesized using a known method or a commercially available product may be procured. Examples of commercially available products include Carnauba Wax C1 (KATO YOKO) for carnauba wax, and Licowax KP (CLARIANT) for montan wax.

No particular restrictions exist for the charge control agent; the charge control agent may be selected as appropriate from known charge control agents.

Examples include nigrosine dyes, triphenylmethane dyes, chromium-containing metal complex dyes, molybdic acid chelate pigments, rhodamine dyes, alkoxy amines, quaternary ammonium salts (including fluorine-modified quaternary ammonium salts), alkylamides, simple phosphorus and compounds thereof, simple tungsten and compounds thereof, fluorine-based active agents, metal salts of salicylic acid, and metal salts of salicylic acid derivatives.

The charge control agent may be used solely or in a combination of two or more types.

The charge control agent content varies according to factors such as the type of the abovementioned resin and the presence or absence of other additives, and it is difficult to unequivocally define the charge control agent content. As a guide, the charge control agent content is normally 0.1 to 10% and preferably 0.2 to 5% in relation to the total mass of the resin containing at least a polyester resin and constituting the above resin-composition powder.

If the charge control agent content is less than 0.1%, it may not be possible to obtain a charge control effect. If the charge control agent content exceeds 10%, the charging property of the resin-composition powder will become too large and the effect of the charge control agent will be reduced, increasing the electrostatic attraction force between the resin-composition powder and a development roller, which may reduce the fluidity of the powder or reduce the image density.

Examples of the commercially available charge control agents include: Bontron 03 (nigrosine dye), Bontron P-51 (quaternary ammonium salt), Bontron S-34 (metal-containing azo dye), Bontron E-82 (metal complex of oxynaphthoic acid), Bontron E-84 (metal complex of salicylic acid), and BONTRON E-89 (phenolic condensation product) (ORIENT CHEMICAL INDUSTRIES); TP-302 and TP-415 (molybdenum complex of quaternary ammonium salt) (HODOGAYA CHEMICAL); Copy Charge PSY VP2038 (quaternary ammonium salt), Copy Blue PR (triphenyl methane derivative), Copy Charge NEG VP2036 and NX VP434 (quaternary ammonium salt) (HOECHST AG); LRA-901, and LR-147 (boron complex) (JAPAN CARLIT); copper phthalocyanine; perylene; quinacridone; azo pigments; and polymers having a functional group such as a sulfonate group, a carboxyl group, or a quaternary ammonium group, etc.

Examples of the external additives include silica, alumina, titanium oxide, barium titanate, magnesium titanate, calcium titanate, strontium titanate, iron oxide, zinc oxide, tin oxide, silica sand, clay, mica, wollastonite, diatomaceous earth, chromium oxide, cerium oxide, red iron oxide, antimony trioxide, magnesium oxide, zirconium oxide, barium sulfate, barium carbonate, calcium carbonate, silicon carbide, and silicon nitride.

These external additives may be subjected to a hydrophobicity treatment using a silane coupling agent such as methyltrimethoxysilane, methyltriethoxysilane, or octyltrimethoxysilane. It is also possible to perform a silicone oil treatment as required, and the treatment may be performed under heating. Examples of the silicone oil include dimethyl silicone oil, methyl-phenyl silicone oil, chlorophenyl silicone oil, fluorine-modified silicone oil, polyether-modified silicone oil, alcohol-modified silicone oil, amino-modified silicone oil, epoxy-modified silicone oil, epoxy-polyether-modified silicone oil, phenol-modified silicone oil, carboxyl-modified silicone oil, mercapto-modified silicone oil, acrylic-modified silicone oil, methacrylic-modified silicone oil, and α-methylstyrene-modified silicone oil.

The amount of the external additive is normally 0.1 to 5% relative to the total mass of the toner treated by the external additive.

The primary particle diameter of the external additive is preferably 5 nm to 2 µm and more preferably 5 to 500 nm. The specific surface area by the BET method of the external additive is preferably 20 to 500 m²/g.

Examples of commercially available products of the external additives include: for silica, AEROSIL R812, AEROSIL RX50, AEROSIL RX200, and AEROSIL RX300 (NIPPON AEROSIL), TG-6110G, TG-810G, and TG-811F (CABOT JAPAN), and H2000/4, H2000T, H05TM, H13TM, H20TM, and H30TM (CLARIANT JAPAN), etc.; for alumina, AEROXIDE Alu C 805 (NIPPON AEROSIL), etc.; for titanium oxide, STT-30A and EC-300 (TITAN KOGYO) and AEROXIDE Ti02 T805 and AEROXIDE Ti02 NKT90 (NIPPON AEROSIL), etc.; and for strontium titanate, SW-100 and SW-350 (TITAN KOGYO), etc. From among the above, AEROSIL RX300, H05TM, TG-811F, SW-100, and SW-350 are preferred.

The amount of the external additive used is normally 0.01 to 5% and preferably 0.01 to 4% relative to the total mass of the resin-composition powder treated by the external additive.

Heating or melt-kneading the abovementioned components as required and then pulverizing and classifying the resulting product make it possible to obtain a powder toner. During pulverization and classification, it is also possible to perform "spheroidization," in which particles of the resin composition produced by, e.g., pulverization are subjected to a heating treatment in a fluid state in an airflow, whereby particles having a pointed end or a distorted shape are made more spherical.

Examples of the dyeing subject include substances containing at least a hydrophobic fiber or a hydrophobic resin. Also included are substances dyed by the above dyeing method.

With regards to the above, examples of hydrophobic fibers include hydrophobic fibers and mixed fibers containing a hydrophobic fiber, and fabrics which are structures of said fibers. An example of a hydrophobic fiber is one containing at least a polyester fiber.

An example of a substance containing a hydrophobic resin mentioned above is a substance containing at least a polyester resin as a hydrophobic resin.

Examples of substances containing a hydrophobic resin include: films and sheets containing a hydrophobic resin, preferably PET films and PET sheets; and fabrics, glass, metal, ceramics, etc., coated by a hydrophobic resin. "PET" refers to polyethylene terephthalate.

Specific examples of the above-mentioned hydrophobic fibers and mixed fibers containing a hydrophobic fiber, and fabrics which are structures of said fibers, include satin, tropical, double pique, and microfibers.

No particular limitations exist with regards to the intermediate recording medium. The intermediate recording medium may be selected as appropriate from paper and paperboard varieties and processed products set out in "3. Classification f) Paper and Paperboard Varieties and Processed Products" (nos. 6001 to 6284; excluding no. 6235, "greaseproof"; no. 6263, "flute, stage"; no. 6273, "pulp molded products"; no. 6276, "carbon paper"; no. 6277, "multicopy form paper"; and no. 6278, "back carbon form paper") on pages 28 to 47 of "Terms of Paper, Board and Pulp [JIS P 0001:1998(Reaffirmed 2008, revised March 20, 1998, published by Japanese Standards Association)]", and cellophane (the "paper and paperboard types and processed products, and cellophane" will hereafter be referred to as "paper and the like").

Examples of the above "paper and the like" include: ivory board, asphalt paper, art paper, colored board, colored wood-free paper, inkjet printing paper, Senka printing paper, printing paper, printing paper grade A, printing paper grade B, printing paper grade C, printing paper grade D, Indian paper, printing tissue paper, Japanese tissue paper, back carbon paper, air mail paper, sanitary paper, embossed paper, optical character recognition paper, offset printing paper, cardboard, chemical fiber paper, processed paper, drawing paper, pattern paper, single-gloss craft paper, wallpaper base, thread paper, paper string base, pressure-sensitive copying paper, light-sensitive paper, thermal recording paper, rice paper, can board, straw board and yellow strawpaper or straw board, imitation leather paper (board), ticket paper (board), high-performance paper, cast coated paper (board), kyohana-shi, Japanese vellum, metallized paper , metal foil paper, glassine, rotogravure paper, kraft paper, extensible kraft paper, kraft board, crepe paper, lightweight coat paper, cable insulating paper, saturating decorative paper, building materials base, Kent paper, abrasive paper base, synthetic paper, synthetic fiber paper, coat paper, capacitor tissue paper, miscellaneous paper, woody paper, bleached kraft paper, diazo sensitized paper, core paper (board), magnetic recording paper, boxboard, dictionary paper, lightproof paper, heavy duty sack kraft paper, machine glazed paper, security paper, shoji-gami, wood-free paper (board), communication paper, food paper (board), book paper, shodo-yoshi, white lined board, white lined chipboard, newsprint, blotting paper, water-soluble paper, drawing paper, fibbed kraft paper, laid paper, speaker cone paper, dielectric-coated paper, cellulose wadding, industrial laminates base, gypsum linear board, adhesive and release paper base, printing paper grade B special, cement sack paper, cement bag paper, ceramic paper, solid fiberboard, tar paper, tarpaulin paper, alkali-resistant paper, fire-resistant paper (board), acid-resistance paper, greaseproof paper, grease resistant paper or board, towel paper, dan-shi, corrugated fiberboard, liner and corrugating medium, map paper, chip board, wood-containing paper, alkaline paper, chiri-gami, mat art paper, tea bag paper, facial tissue, soft tissue, electrical insulating paper (board), tengujo, pasted paper (board), transfer paper, toilet tissue paper, tabulating card paper, stencil paper (board), coated printing paper, coating base paper, torinoko, tracing paper, corrugating medium, napkin paper, flame-resistant paper, paper for non-impact printing, tag paper, pressure-sensitive adhesive paper, carbonless copying paper, release paper, machine-glazed brown wrapping paper, waxed paper (board), vulcanized fiber, han-shi, paper for indirect electrostatic process, writing paper, ultra-lightweight coat paper, business form, manifold base paper, press board, moisture-proof paper, hosho-shi, waterproof paper, non-tarnish paper, anti-tarnish paper, antirust paper, non-rust paper, wrapping paper, bond paper, manila board, MINO-GAMI, milk carton board, simili paper, oiled paper, YOSHINO-GAMI, rice paper/cigarette paper, linearboard/liner, vegetable parchment, kraft paper, roofing paper, filter paper, WASHI, varnished paper, mill wrapper, light-weight paper, air-dried paper, wet strength paper, ashless paper, acid free paper, paper or board without finish, two-layer paper or board, three-layer paper or board, multi-layer paper or board, unsized paper, sized paper, wove paper, veined paper or board, machine-finished paper or board, machine-glazed paper or board, plate-glazed paper or board, friction-glazed paper or bard, calendered paper or board, super calendered paper, lamine (paper or board), one-side colored paper or board, two sides colored paper or board, twin wire paper or board, rag paper, all-rag paper, mechanical woodpulp or board, mixed straw paper or board, water-finished paper or board, chipboard, lined chipboard, millboared, glazed millboared, solid board, mechanical pulp board, brown mechanical pulp board, leatherfiber board, asbestos board, felt board, tarred brown paper, waterleaf paper, surface sized paper, presspahn, press paper, cockle-finished paper, pasted ivory board, blade coated paper, roll coated paper, gravure coated paper, size press coated paper, brush coated paper, air knife coated paper, extrusion coated paper, dip coated paper, curtain coated paper, hot melt coated paper, solvent coated paper, emulsion coated paper, bubble coated paper, imitation art paper, bible paper, poster paper, wrapping tissue, base paper or board, carbonizing base paper, base paper for diazotype, photographic base paper, base paper or board for the protection of frozen and deep-frozen foods, i.e., direct contact, base paper or board for the packing of frozen and deep-frozen foods, i.e., non-contact, banknote paper, insulating paper or board, paper for laminated insulators, paper for conductor insulation, shoe board, paper for textile paper tubes, jacquard paper or board, board for pressing, bookbinding board, suitcase board, flong, archival paper, kraft liner, test liner, kraft faced liner, "couverture ordinaire", envelope paper, folding boxboard, coated folding boxboard, bleached lined folding boxboard, typewriting paper, stencil duplicator copy paper, spirit duplicator copy paper, calendar bowl paper, ammunition cartridge, fluting (corrugating) paper, flute, fluted paper, union paper, reinforced union paper, cloth-lined paper or board, cloth-centered paper or board, pasted lined board, "carton compact", heavy (wet) crepe, index card, carbonless copy paper forms, correspondence envelope, post card, illustrated postcard, lettercard, and illustrated lettercard; and cellophane, and the like.

Any material from among the papers and the like listed above that can be used for sublimation transfer can be used as the intermediate recording medium.

As described further below, when sublimation transfer is performed, the material is normally heat-treated at about 190 to 210°C. Therefore, from among the abovementioned intermediate recording mediums, those that are stable during the heat treatment are preferable.

With regards to combinations of the abovementioned materials, a combination of preferable materials is more preferable, and a combination of materials that are more preferable is further preferable. The same applies to combinations of a preferable material and a more preferable material, and combinantions of a more preferable material and a further preferable material.

The method for preventing bleeding of dye from a powder according the present invention makes it possible to inhibit the phenomenon of a dye appearing on the surface of a resin-composition powder during transportation, use, storage, or the like under high temperatures in particular. It thereby becomes possible to inhibit dye bleeding from the resin composition and provide a high-quality resin-composition powder that has an extremely high heat stability and temporal stability and that can be applied to a variety of uses.

In the method for improving dyeing properties according to the present invention, the phenomenon of a dye appearing on the surface of a resin-composition powder during transportation, use, storage, or the like under high temperatures in particular is inhibited, whereby a variety of dyeing properties are improved. These dyeing properties include sweeping unevenness, image memory, dyeing density, white background fouling, dyeing unevenness, dyeing reproducibility, buildup performance, dyeability, and dye levelling performance. As a result, the present invention makes it possible to provide a method for improving dyeing properties using a resin-composition powder that has an extremely high heat stability and temporal stability and that can be applied to a variety of uses.

### EXAMPLES

The present invention will now be described in further detail using the following examples. However, the examples are not provided by way of limitation to the present invention.

In the examples, the average particle diameter was measured using a precision particle size distribution measurement device "Multisizer 3" (BECKMAN COULTER).

### <Example A>

Dye resin compositions representing examples and comparative examples were prepared and the aggregation preventing effect thereof was tested as follows.

### [Example A-1]

Using Diacron FC-316 (MITSUBISHI RAYON) (43.8 parts; polyester resin), C.I. Disperse Yellow 54 (1.8 parts; NIPPON KAYAKU), C.I. Disperse Red 60 (1.4 parts; NIPPON KAYAKU), and C.I. Disperse Blue 72 (5.8 parts; NIPPON KAYAKU), the resin and the dyes were dissolved on a 220°C hotplate and kneaded for one minute. The resultant kneaded product was pulverized using a mixer (BM-RS08, ZOJIRUSHI CORP), whereby a resin-composition powder containing the dyes was obtained.

### [Example A-2]

Using Diacron FC-316 (MITSUBISHI RAYON) (48.0 parts; polyester resin), C.I. Disperse Blue 359 (3.5 parts; NIPPON KAYAKU), and C.I. Solvent Blue 63 (3.5 parts; NIPPON KAYAKU), the resin and the dyes were dissolved on a 220°C hotplate and kneaded for one minute. The resultant kneaded product was pulverized using a mixer (BM-RS08, ZOJIRUSHI CORP), whereby a resin-composition powder containing the dyes was obtained.

### [Comparative example A-1]

Using Diacron FC-316 (MITSUBISHI RAYON) (52.5 parts; polyester resin) and C.I. Disperse Yellow 54 (2.4 parts;

NIPPON KAYAKU), the resin and the dye were dissolved on a 220°C hotplate and kneaded for one minute. The resultant kneaded product was pulverized using a mixer (BM-RS08, ZOJIRUSHI CORP), whereby a resin-composition powder containing the dye was obtained.

### [Comparative example A-2]

Using Diacron FC-316 (MITSUBISHI RAYON) (48.0 parts; polyester resin) and C.I. Disperse Blue 359 (7.0 parts; NIPPON KAYAKU), the resin and the dye were dissolved on a 220°C hotplate and kneaded for one minute. The resultant kneaded product was pulverized using a mixer (BM-RS08, ZOJIRUSHI CORP), whereby a resin-composition powder containing the dye was obtained.

The solubility in propylene glycol monomethyl ether acetate of each of the dyes contained in the resin-composition powders prepared as described above is shown in Table 1 below.

The abbreviations in Table 1 represent the following.
DsY 54: C.I. Disperse Yellow 54
DsR 60: C.I. Disperse Red 60
DsB 72: C.I. Disperse Blue 72
DsB 359: C.I. Disperse Blue 359
SvB 63: C.I. Solvent Blue 63

**[Table 1]**

| Composition | Dye 1 | | Dye 2 | | Dye 3 | |
|---|---|---|---|---|---|---|
| | Dye | Solubility (g/100 ml) | Dye | Solubility (g/100 ml) | Dye | Solubility (g/100 ml) |
| Example A-1 | DsY 54 | 0.04 | DsR 60 | 1.5 | DsB 72 | 0.2 |
| Example A-2 | DsB 359 | 0.06 | SvB 63 | 1.3 | - | - |
| Comparative example A-1 | DsY 54 | 0.04 | - | - | - | - |
| Comparative example A-2 | DsB 359 | 0.06 | - | - | - | - |

Bleeding of dyes from the resin-composition powders prepared as described above was evaluated on the basis of the following method. Results are shown in Table 2.

### [Bleeding test]

5.0 g of the dye resin composition was weighed into a 50-ml glass tube bottle (SV-50A, NICHIDEN RIKA), sealed by a cap lid, stored under the following two conditions, and then allowed to stand until room temperature is reached. Then, the presence/absence of dye bleeding was evaluated according to the following evaluation criteria A to D from an electron microscope (S-4800 Field Emission Scanning Electron Microscope; HITACHI HIGH-TECHNOLOGIES) photograph of the resin-composition powders.
Condition 1: stored for 24 hours in room temperature (25°C)
Condition 2: placed in a thermostatic chamber at 60 ± 1°C and stored for 24 hours

### [Evaluation criteria]

A: Almost no bleeding of solids observed.
B: Bleeding of solids observed, but mostly small solids measuring less than 1 µm.
C: Bleeding of solids observed; many medium-sized solids measuring 1 µm to less than 3 µm observed.
D: Bleeding of solids observed in large numbers; many solids measuring 3 µm or above observed.

**[Table 2]**

| Test result | Test condition | Examples | | Comparative examples | |
|---|---|---|---|---|---|
| | | A-1 | A-2 | A-1 | A-2 |
| Bleeding | Room temperature | A | A | B | C |
| | 60°C | A | B | D | D |

As can be seen from Table 2, it was found that the powders of the present invention have an effect of preventing bleeding of dye from the powders.

### [Example A-3]

### (Step 1)

Using Diacron FC-316 (MITSUBISHI RAYON) (95 parts), C.I. Disperse Yellow 54 (1.5 parts; NIPPON KAYAKU), C.I. Disperse Red 60 (2.0 parts; NIPPON KAYAKU), C.I. Disperse Blue 72 (6.5 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The melt-kneaded product was pulverized and classified using a pulverizer-classifier to obtain toner base particles having an average particle diameter of 8.0 µm.

### (Step 2)

The toner base particles (100 parts) obtained in Example A-3 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a black toner of Example A-3 was prepared.

### [Example A-4]

### (Step 1)

Using Diacron FC-316 (MITSUBISHI RAYON) (95 parts), C.I. Disperse Blue 359 (5.0 parts; NIPPON KAYAKU), C.I. Solvent Blue 63 (5.0 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The melt-kneaded product was pulverized and classified using a pulverizer-classifier to obtain toner base particles having an average particle diameter of 7.5 µm.

### (Step 2)

The toner base particles (100 parts) obtained in Example A-4 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a cyan toner of Example A-4 was prepared.

### [Comparative example A-3]

### (Step 1)

Using Diacron FC-316 (MITSUBISHI RAYON) (105 parts), C.I. Disperse Yellow 54 (5.0 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The melt-kneaded product was pulverized and classified using a pulverizer-classifier to obtain toner base particles having an average particle diameter of 7.8 µm.

### (Step 2)

The toner base particles (100 parts) obtained in comparative example A-3 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a yellow toner containing only one type of dye for comparative purpose was obtained.

### [Comparative example A-4]

### (Step 1)

Using Diacron FC-316 (MITSUBISHI RAYON) (96 parts), C.I. Disperse Blue 359 (11.5 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The melt-kneaded product was pulverized and classified using a pulverizer-classifier to obtain toner base particles having an average particle diameter of 7.8 µm.

### (Step 2)

The toner base particles (100 parts) obtained in comparative example A-4 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a cyan toner containing only one type of dye for comparative purpose was obtained.

Toners of Examples A-3 and A-4 and comparative examples A-3 and A-4 were tested as described in "[Bleeding test]" above and evaluated according to the "[Evaluation criteria]" set out above. Results are shown in Table 3 below.

**[Table 3]**

| Test result | Test condition | Examples | | Comparative examples | |
|---|---|---|---|---|---|
| | | A-3 | A-4 | A-3 | A-4 |
| Bleeding | Room temperature | A | A | D | D |
| | 60°C | A | C | D | D |

As can be seen from Table 3, it was found that even in a state of a powder toner containing additives such as a charge control agent and a wax in addition to the resin and the dye, the powders of the present invention have an effect of preventing bleeding of dye from the toner.

Preparation of resin-composition powders and results of evaluating each of the prepared powders according to Examples A-5 to A-9 and comparative examples A-5 and A-6 are set out below. The mixer used to prepare each of the powders was BM-RS08 (ZOJIRUSHI).

### [Example A-5]

Using Diacron FC-316 (MITSUBISHI RAYON) (48.0 parts; polyester resin), C.I. Disperse Yellow 54 (2.0 parts; NIPPON KAYAKU), and C.I. Disperse Red 60 (2.0 parts; NIPPON KAYAKU), the resin and the dyes were dissolved on a 220°C hotplate and kneaded for one minute. The obtained kneaded product was pulverized using a mixer, whereby a resin-composition powder containing the dyes was obtained.

### [Embodiment A-6]

Using Diacron FC-316 (MITSUBISHI RAYON) (48.0 parts; polyester resin), C.I. Disperse Blue 359 (3.0 parts; NIPPON KAYAKU), and C.I. Disperse Blue 72 (3.0 parts; NIPPON KAYAKU), the resin and the dyes were dissolved on a 220°C hotplate and kneaded for one minute. The resultant kneaded product was pulverized using a mixer, whereby a resin-composition powder containing the dyes was obtained.

### [Example A-7]

Using Diacron FC-316 (MITSUBISHI RAYON) (48.0 parts; polyester resin), C.I. Disperse Yellow 54 (2.0 parts; NIPPON KAYAKU), and C.I. Solvent Blue 63 (2.0 parts; NIPPON KAYAKU), the resin and the dyes were dissolved on a 220°C hotplate and kneaded for one minute. The resultant kneaded product was pulverized using a mixer, whereby a resin-composition powder containing the dyes was obtained.

### [Example A-8]

Using Diacron FC-316 (MITSUBISHI RAYON) (44.0 parts; polyester resin), C.I. Disperse Blue 359 (1.0 parts; NIPPON KAYAKU), C.I. Solvent Blue 63 (3.0 parts; NIPPON KAYAKU), and C.I. Disperse Red 60 (3.0 parts; NIPPON KAYAKU), the resin and the dyes were dissolved on a 220°C hotplate and kneaded for one minute. The resultant kneaded product was pulverized using a mixer, whereby a resin-composition powder containing the dyes was obtained.

### [Example A-9]

Using Diacron FC-316 (MITSUBISHI RAYON) (48.0 parts; polyester resin), C.I. Disperse Blue 360 (2.0 parts; SENSIENT TECHNOLOGIES), C.I. Disperse Yellow 54 (1.0 part; NIPPON KAYAKU), and C.I. Disperse Red 60 (2.0 parts; NIPPON KAYAKU), the resin and the dyes were dissolved on a 220°C hotplate and kneaded for one minute. The resultant kneaded product was pulverized using a mixer, whereby a resin-composition powder containing the dyes was obtained.

The solubility in propylene glycol monomethyl ether acetate of each of the dyes contained in the resin-composition powders prepared as described above is shown in Table 4 below.

The abbreviations in Table 4 represent the following.
DsY 54: C.I. Disperse Yellow 54
DsR 60: C.I. Disperse Red 60
DsB 72: C.I. Disperse Blue 72
DsB 359: C.I. Disperse Blue 359
DsB 360: C.I. Disperse Blue 360
SvB 63: C.I. Solvent Blue 63

**[Table 4]**

| Composition | Dye 1 | | Dye 2 | | Dye 3 | |
|---|---|---|---|---|---|---|
| | Dye | Solubility (g/100 ml) | Dye | Solubility (g/100 ml) | Dye | Solubility (g/100 ml) |
| Example A-5 | DsY 54 | 0.04 | DsR 60 | 1.5 | - | - |
| Example A-6 | DsB 359 | 0.06 | DsB 72 | 0.2 | - | - |
| Example A-7 | DsY 54 | 0.04 | SvB 63 | 1.3 | - | - |
| Example A-8 | DsB 359 | 0.06 | SvB 63 | 1.3 | DsR 60 | 1.5 |
| Example A-9 | DsB 360 | 0.06 | DsY 54 | 0.04 | DsR 60 | 1.5 |

Bleeding of dyes from the resin-composition powders prepared as described above was evaluated on the basis of the following method. Results are shown in Table 5 below.

### [Bleeding test]

5.0 g of the dye resin composition was weighed into a 50-ml glass tube bottle (SV-50A, NICHIDEN RIKA), sealed by a cap lid, stored under the following two conditions, and then allowed to stand until room temperature is reached. Then, the presence/absence of dye bleeding was evaluated according to the following evaluation criteria A to D from an electron microscope (S-4800 Field Emission Scanning Electron Microscope; HITACHI HIGH-TECHNOLOGIES) photograph of the resin-composition powders.
Condition 1: stored for 24 hours in room temperature (25°C)
Condition 2: placed in a thermostatic chamber at 60 ± 1°C and stored for 24 hours

### [Evaluation criteria]

A: Almost no bleeding of solids observed.
B: Bleeding of solids observed, but mostly small solids measuring less than 1 µm.
C: Bleeding of solids observed; many medium-sized solids measuring 1 µm to less than 3 µm observed.
D: Bleeding of solids observed in large numbers; many solids measuring 3 µm or above observed.

**[Table 5]**

| Test Result | Examples | | | | | | | Comparative examples | |
|---|---|---|---|---|---|---|---|---|---|
| | A-1 | A-2 | A-5 | A-6 | A-7 | A-8 | A-9 | A-1 | A-2 |
| Room temperature | A | A | A | A | A | A | A | B | C |
| 60°C | A | B | A | B | A | A | A | D | D |

As can be seen from Table 5, it was found that the powders of the present invention have an effect of preventing bleeding of dye from the powders. In addition, as the bleeding evaluation result deteriorates from A to D, the aggregation property and the state of aggregates also deteriorate, confirming that there is a correlation between the bleeding of the dyes from the powder and aggregation property.

### <Examples B>

As an example of the above resin-composition powders, powder toners were prepared and the effect of the powder toners of improving dyeing properties was tested.

### [Example B-1]

A black toner of Example B-1 was prepared in a similar manner to that in the above Example A-3 (step 1) and (step 2). The black toner in Example A-3 and the black toner in Example B-1 are essentially identical.

### [Example B-2]

A cyan toner of Example B-2 was prepared in a similar manner to that in the above Example A-4 (step 1) and (step 2). The cyan toner in Example A-4 and the cyan toner in Example B-2 are essentially identical.

### [Comparative example B-1]

### (Step 1)

Using Diacron FC-316 (MITSUBISHI RAYON) (105 parts), C.I. Disperse Yellow 54 (5.0 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The resultant melt-kneaded product was pulverized and classified using a pulverizer-classifier to obtain toner base particles having an average particle diameter of 7.8 µm.

### (Step 2)

The toner base particles (100 parts) obtained in comparative example B-1 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a yellow toner containing only one type of dye for comparative purpose was obtained.

### [Comparative example B-2]

### (Step 1)

Using Diacron FC-316 (MITSUBISHI RAYON) (96 parts), C.I. Disperse Blue 359 (11.5 parts; NIPPON KAYAKU), Bontron E-84 (1 part), and Carnauba Wax C1 (4 parts) were introduced into a Henschel mixer, preliminarily mixed for 10 minutes at a rotation speed of 30 m/sec, and then melt-kneaded using a twin-screw extruder. The resultant melt-kneaded product was pulverized and classified using a pulverizer-classifier to obtain toner base particles having an average particle diameter of 7.8 µm.

### (Step 2)

The toner base particles (100 parts) obtained in comparative example B-2 (step 1), H05TM (1.5 parts; CLARIANT JAPAN), TG-811F (1.5 parts; CABOT), and SW-100 (1.0 parts; TITAN KOGYO) were introduced into a Henschel mixer and stirred for 10 minutes at a rotation speed of 30 m/sec, and a cyan toner containing only one type of dye for comparative purpose was obtained.

The solubility in PGMEA of each of the dyes contained in the resin-composition powders prepared as described above is shown in Table 6 below.

The abbreviations in Table 5 represent the following.
DsY 54: C.I. Disperse Yellow 54
DsR 60: C.I. Disperse Red 60
DsB 72: C.I. Disperse Blue 72
DsB 359: C.I. Disperse Blue 359
SvB 63: C.I. Solvent Blue 63

**[Table 6]**

| Composition | Dye 1 | | Dye 2 | | Dye 3 | |
|---|---|---|---|---|---|---|
| | Dye | Solubility (g/100 ml) | Dye | Solubility (g/100 ml) | Dye | Solubility (g/100 ml) |
| Example B-1 | DsY 54 | 0.04 | DsR 60 | 1.5 | DsB 72 | 0.2 |
| Example B-2 | DsB 359 | 0.06 | SvB 63 | 1.3 | - | - |
| Comparative example B-1 | DsY 54 | 0.04 | - | - | - | - |
| Comparative example B-2 | DsB 359 | 0.06 | - | - | - | - |

### [Preparation of intermediate recording medium to which resin-composition powder is affixed]

A dry non-magnetic one-component development printer (KIPc7800; KATSURAGAWA ELECTRIC) was filled with the toners obtained in the above examples and comparative examples. A0 bond paper was used as the intermediate recording medium, and intermediate recording mediums in which solid images were printed under a condition of resolution: 600 pixel/inch, fixing temperature: 140 °C, and development bias: 200 V were respectively obtained.

[Evaluation test 1] Image quality of intermediate recording medium (sweeping unevenness and image memory)

The obtained intermediate recording media were visually observed for the presence/absence of sweeping unevenness and image memory, and evaluated according to the following evaluation criteria. Evaluation results are shown in Table 7.
A: Sweeping unevenness and image memory are absent, and a uniform solid image is obtained.
B: Slight sweeping unevenness and image memory are observed.
C: Clear sweeping unevenness and image memory are observed.
D: Extremely conspicuous sweeping unevenness and image memory are clearly observed.

The toner adhesion surface of each of the obtained intermediate recording media and double pique (basis weight: 90 g/m²) comprising 100% polyester fibers and constituting the dyed subject were overlapped and then heat-treated using a heat press machine (TP-600A2 transfer press; TAIYO SEIKI) under a condition of 195°C for 60 seconds, whereby the products dyed by a sublimation transfer dyeing method were respectively obtained.

### [Evaluation test 2] Dyeing density

The dyed portion of each of the dyed product was colorimetrically measured using a spectrophotometer (SpectroEye; GRETAG-MACBETH) and the dyeing density was measured. A dyeing density of 1.35 or above is deemed to be satisfactory. In each of the examples and the comparative examples, the dyeing density was 1.4 or above and was therefore satisfactory.

### [Evaluation test 3] Evaluation of white background fouling by colorimetric measurement

A white background portion of each of the dyed products obtained in evaluation example 1 was colorimetrically measured using a spectrophotometer (SpectroEye; GRETAG-MACBETH) and the extent of white background fouling indicated below (i.e., measured value for the white background portion of each of the dyed products - value obtained by similarly colorimetrically measuring the double pique prior to dyeing) to evaluate the white background fouling. Evaluation results are shown on Table 7 below.

### [Evaluation test 4] Visual evaluation of white background fouling

For each of the dyed products used in evaluation example 2, the extent of fouling of the colorimetrically measured white background portion was visually observed and evaluated according to the following four-staged criteria. Evaluation results are shown in the following table 7.
A: Almost no white background fouling is observed
B: Slight white background fouling is observed
C: Clear white background fouling is observed
D: Severe white background fouling is clearly observed

### [Evaluation test 5] Visual evaluation of dyeing unevenness of dyed product

For each of the dyed products used in evaluation example 4, the extent of dyeing unevenness was visually observed and evaluated according to the following staged criteria. Evaluation results are shown in the following table 7.
A: High-quality dyed product with no dyeing unevenness is obtained
B: Slight dyeing unevenness is observed
C: Clear dyeing unevenness is observed

**[Table 7]**

| Test result | Evaluation test | | | |
|---|---|---|---|---|
| | 1 | 3 | 4 | 5 |
| Example B-1 | A | 0.01 | A | A |
| Example B-2 | A | 0.01 | B | A |
| Comparative example B-1 | B | 0.01 | B | B |
| Comparative example B-2 | C | 0.03 | C | C |

As can be seen in Table 7, it was found that every dyeing property was improved in each of the examples so as to be equivalent to or superior to each of the comparative examples.

### INDUSTRIAL APPLICABILITY

The method for preventing bleeding of dye from a powder according to the present invention makes it possible to inhibit aggregation of a resin-composition powder containing dyes, which can be applied to a variety of uses, and the method is therefore extremely useful. In addition, the method for improving dyeing properties according to the present invention results in a high dyeing density and makes it possible to inhibit white background fouling, dyeing unevenness, and the like of the dyed product, and the method is therefore extremely useful as a method which can provide a high-quality dyed product or printed product devoid of image defects in dyeing or printing in which a powder toner, powder coating, or the like containing dyes used for dyeing methods such as sublimation dyeing and direct dyeing using electrophotography is used.

## Claims

1. A resin-composition powder comprising at least a resin and at least two types of dyes each having a sublimation property,
wherein at least one type of dye from among the at least two types of dyes each having a sublimation property has a solubility in propylene glycol monomethyl ether acetate of 0.2 to 3 g/100 mL, and
wherein at least one type of another dye from among the at least two types of dyes has a solubility in propylene glycol monomethyl ether acetate of less than 0.2 g/100 mL.

2. A resin-composition powder comprising at least a resin and at least two types of dyes each having a sublimation property,
wherein at least one type of dye from among the at least two types of dyes each having a sublimation property has a solubility in propylene glycol monomethyl ether acetate of 0.5 to 3 g/100 mL, and
wherein at least one type of another dye from among the at least two types of dyes has a solubility in propylene glycol monomethyl ether acetate of less than 0.5 g/100 mL.

3. The powder according to claim 2, wherein the ratio, on a mass basis, between the total content of the dye having a solubility in propylene glycol monomethyl ether acetate of 0.5 to 3 g/100 mL and the total content of the dye having a solubility in propylene glycol monomethyl ether acetate of less than 0.5 g/100 mL in the total mass of the resin-composition powder is 10/90 to 90/10.

4. The powder according to claim 2 or 3, wherein the at least one type of dye from among the at least two types of dyes each having a sublimation property having a solubility in propylene glycol monomethyl ether acetate of 0.5 to 3 g/100 mL is a dye selected from anthraquinone, quinophthalone, and azo compounds, and
wherein the at least one type of another dye is a dye selected from anthraquinone, azo, azomethine, indophenol, indoaniline, pyrroline, quinophthalone, and naphthalimide compounds.

5. The resin-composition powder according to any of claims 2 to 4, for use in prevention of bleeding of dye from the powder, or for use as a colorant in a method for improving dyeing properties.

6. A toner comprising the resin-composition powder according to any of claims 2 to 4, a charge control agent, and a wax.

7. The toner according to claim 6, for use in prevention of bleeding of dye, or for use as a colorant in a method for improving dyeing properties.

8. A method for preventing bleeding of dye from the powder in the resin-composition powder according to any of claims 2 to 4.

9. The method for preventing bleeding of dye according to claim 8, wherein the resin-composition powder is a toner.

10. The method for preventing bleeding of dye according to claim 8 or 9, wherein the resin-composition powder is a toner further comprising a charge control agent and a wax.

11. A method for improving dyeing properties in a dyeing method in which the resin-composition powder according to any of claims 2 to 4 is used as a colorant.

12. The method for improving dyeing properties according to claim 11, wherein the resin-composition powder is a toner.

13. The method for improving dyeing properties according to claim 11 or 12, wherein the resin-composition powder further comprises a charge control agent and a wax.

14. The method for improving dyeing properties according to any of claims 11 to 13, wherein the dyeing method in which the resin-composition powder is used as a colorant is a sublimation transfer dyeing method comprising:
affixing a resin-composition powder to an intermediate recording medium by electrophotography, and
sublimation-transferring a dye contained in the resin-composition powder affixed to the intermediate recording medium to a material to be dyed , whereby dyeing is performed.

15. An intermediate recording medium to which the resin-composition powder is affixed by electrophotography in the method for improving dyeing properties according to claim 14.

16. A substance dyed by the method according to any of claims 11 to 14.
